# EUROPÄISCHE PATENTSCHRIFT

(11) **EP 3 277 050 B1**
(45) Veröffentlichungstag und Bekanntmachung des Hinweises auf die Patenterteilung: **09.10.2019**
(21) Anmeldenummer: 16181838.0
(22) Anmeldetag: 29.07.2016
(51) Int. Cl.: H04W 76/16, H04W 76/15

(54) **FUNKZUGANGSENTITÄT**
RADIO ACCESS ENTITY
ENTITE D'ACCES RADIO

(43) Veröffentlichungstag der Anmeldung: 31.01.2018
(73) Patentinhaber: Deutsche Telekom AG, 53113 Bonn (DE)
(72) Erfinder: Zimmermann, Gerd, 66431 Weiterstadt (DE)
(74) Vertreter: Braun-Dullaeus Pannen Emmerling Patent- & Rechtsanwaltspartnerschaft mbB

(56) Entgegenhaltungen:
- WO-A1-2014/032717
- WO-A1-2016/105568
- WO-A2-2014/204716
- US-A1- 2010 062 800
- US-A1- 2014 078 906
- US-B1- 9 002 282

## Beschreibung

Die vorliegende Erfindung betrifft den Funkzugang zu einem drahtlosen Kommunikationsnetzwerk.

In modernen Kommunikationsnetzwerken werden Kommunikationspakete gemäß einem Kommunikationsprotokoll, beispielswese dem Internetprotokoll, zusammengesetzt. Im Funkzugangsbereich werden die Kommunikationspakete per Funk mittels einer drahtlosen Datenübertragungstechnologie, wie beispielsweise LTE oder UMTS, an ein mobiles Kommunikationsgerät übertragen oder von dem mobilen Kommunikationsgerät empfangen. Die Kommunikation mit dem mobilen Kommunikationsgerät findet in der Regel über eine drahtlose Datenübertragungstechnologie, wie beispielsweise LTE, statt.

Ein mobiles Kommunikationsgerät hat in der Regel jedoch mehrere Kommunikationsschnittstellen bzw. Kommunikationsports, wie WLAN und LTE bzw. UMTS, welche für die Kommunikation üblicherweise nicht gemeinsam genutzt werden.

In US 2014/0078906 A1 ist ein Verfahren zur drahtlosen Kommunikation offenbart, wobei Zellulardaten über eine LTE-Verbindung sowie über eine Wi-Fi-Verbindung zwischen einem drahtlosen Gerät und einer Basisstation übertragen werden, und wobei eine Überlastung der LTE-Verbindung und eine Kapazität der Wi-Fi-Verbindung bei der Aufteilung der Zellulardaten berücksichtigt werden können.

In WO 2014/204716 A2 ist ein Verfahren zum Aggregieren von Datenverkehr zur Kommunikation zwischen einer Femtozelle und einem Mobilgerät offenbart, wobei ein Strom von Datenpaketen gemäß unterschiedlicher Übertragungsmodi von der Femtozelle zu dem Mobilgerät übertragen werden kann. Dabei kann zwischen einer LTE-Schnittstelle und einer WiFi-Schnittstelle zur Übertragung der Datenpakete umgeschaltet werden.

Es ist daher eine Aufgabe der vorliegenden Erfindung, ein effizientes Konzept für die Kommunikation über mehrere Kommunikationsschnittstellen zu schaffen.

Diese Aufgabe wird durch die Merkmale der unabhängigen Ansprüche gelöst. Vorteilhafte Weiterbildungsformen sind Gegenstand der Figuren, der Beschreibung sowie der abhängigen Ansprüche.

Die vorliegende Erfindung basiert auf der Erkenntnis, dass die obige Aufgabe durch Aufteilung eines Datenstroms von oder zu dem mobilen Kommunikationsgerät in Abhängigkeit von einer Leistungsfähigkeit oder Performance der Kommunikationsports des mobilen Kommunikationsgerätes gelöst werden kann. Die Teildatenströme werden über die entsprechenden Kommunikationsports übertragen.

Gemäß einem ersten Aspekt betrifft die Erfindung eine Funkzugangsentität für die Kommunikation mit einem mobilen Kommunikationsgerät über ein Funkzugangsnetzwerk, wobei das mobile Kommunikationsgerät einen ersten Kommunikationsport gemäß einer ersten Datenübertragungstechnologie und einen zweiten Kommunikationsport gemäß einer zweiten Datenübertragungstechnologie aufweist, mit einer ersten Kommunikationsschnittstelle zum Empfangen eines Datenstroms, einem Prozessor, welcher ausgebildet ist, den Datenstrom in einen ersten Teildatenstrom und in einen zweiten Teildatenstrom in Abhängigkeit von einer ersten Leistungsfähigkeit des ersten Kommunikationsports des mobilen Kommunikationsgerät und einer zweiten Leistungsfähigkeit des zweiten Kommunikationsport des mobilen Kommunikationsgerät aufzuteilen, und einer zweiten Kommunikationsschnittstelle, welche ausgebildet ist, den ersten Teildatenstrom gemäß der ersten Datenübertragungstechnologie an den erste Kommunikationsport und den zweiten Teildatenstrom gemäß der zweiten Datenübertragungstechnologie an den zweiten Kommunikationsport auszusenden.

In einer Ausführungsform ist der Prozessor ausgebildet, den Datenstrom in Abhängigkeit von einem Verhältnis der ersten Leistungsfähigkeit und der zweiten Leistungsfähigkeit in den ersten Teildatenstrom und in den zweiten Teildatenstrom aufzuteilen.

In einer Ausführungsform sind die erste Leistungsfähigkeit und die zweite Leistungsfähigkeit Datenraten oder Bitfehlerraten oder Performanceindikatoren.

In einer Ausführungsform weist der Datenstrom eine Anzahl von Datenpaketen auf, wobei der Prozessor ausgebildet ist, dem ersten Teildatenstrom eine erste Anzahl von Datenpaketen und dem zweiten Teildatenstrom eine zweite Anzahl von Datenpaketen zuzuweisen.

In einer Ausführungsform sind die erste Datenübertragungstechnologie und die zweite Datenübertragungstechnologie eine der folgenden drahtlosen Datenübertragungstechnologien: LTE, UMTS, GSM, Hiperlan, WLAN.

In einer Ausführungsform umfasst die zweite Kommunikationsschnittstelle einen ersten Kommunikationsport für das Aussenden oder Empfangen des ersten Teildatenstroms und einen zweiten Kommunikationsport für das Aussenden oder Empfangen des zweiten Teildatenstroms.

In einer Ausführungsform ist die Funkzugangsentität ausgebildet, eine Angabe über die erste Leistungsfähigkeit und die zweite Leistungsfähigkeit von dem mobilen Kommunikationsgerät zu empfangen.

In einer Ausführungsform ist die Funkzugangsentität ausgebildet, die erste Leistungsfähigkeit und die zweite Leistungsfähigkeit des mobilen Kommunikationsgeräts zu messen, insbesondere auf der Basis zumindest eines Messsignals zu messen.

In einer Ausführungsform ist die Funkzugangsentität einem Punkt-zu-Punkt-Subkommunikationsnetzwerk, insbesondere einem Slice, gemäß der 5G-Technologie zugeordnet.

Gemäß einem zweiten Aspekt betrifft die Erfindung ein mobiles Kommunikationsgerät, mit einem ersten Kommunikationsport zum Aussenden oder Empfangen eines ersten Teildatenstroms gemäß einer ersten Datenübertragungstechnologie, einem zweiten Kommunikationsport zum Aussenden oder Empfangen eines zweiten Teildatenstroms gemäß einer zweiten Datenübertragungstechnologie, und einem Prozessor, welcher ausgebildet ist, einen Datenstrom aus dem ersten Teildatenstrom und dem zweiten Teildatenstrom zusammenzusetzen oder in Abhängigkeit von einer ersten Leistungsfähigkeit des ersten Kommunikationsports des mobilen Kommunikationsgeräts und einer zweiten Leistungsfähigkeit des zweiten Kommunikationsport des mobilen Kommunikationsgeräts aufzuteilen.

In einer Ausführungsform ist der Prozessor ausgebildet, den Datenstrom in Abhängigkeit von einem Verhältnis der ersten Leistungsfähigkeit und der zweiten Leistungsfähigkeit in den ersten Teildatenstrom und in den zweiten Teildatenstrom aufzuteilen.

Gemäß einem dritten Aspekt betrifft die Erfindung ein Subkommunikationsnetzwerk in einem Kommunikationsnetzwerk mit einer Mehrzahl von Subnetzwerken, mit der Funkzugangsentität nach dem ersten Aspekt, wobei die zweite Kommunikationsschnittstelle ausgebildet ist, den ersten Teildatenstrom gemäß der ersten Datenübertragungstechnologie zu empfangen oder auszusenden und den zweiten Teildatenstrom gemäß der zweiten Datenübertragungstechnologie separat von dem ersten Teildatenstrom zu empfangen oder auszusenden.

In einer Ausführungsform umfasst das Subkommunikationsnetzwerk eine weitere Netzwerkentität, insbesondere einem Router, welche ausgebildet ist, mit der Funkzugangsentität nach dem ersten Aspekt zu kommunizieren.

In einer Ausführungsform ist die weitere Netzwerkentität ausgebildet, den ersten Teildatenstrom und den zweiten Teildatenstrom separat voneinander zu empfangen.

In einer Ausführungsform ist die zweite Kommunikationsschnittstelle der Funkzugangsentität ausgebildet, mit dem mobilen Kommunikationsgerät nach dem zweiten Aspekt zu kommunizieren.

In einer Ausführungsform ist das Subkommunikationsnetzwerk ein Punkt-zu-Punkt-Subkommunikationsnetzwerk, insbesondere eine Slice, gemäß der 5G-Technologie.

Weitere Ausführungsformen der Erfindung werden Bezug nehmend auf die beiliegenden Figuren näher erläutert. Es zeigen:
- Fig. 1: ein Kommunikationssystem mit einer Funkzugangsentität;
- Fig. 2: ein mobiles Kommunikationsgerät; und
- Fig. 3: ein Subkommunikationsnetzwerk.

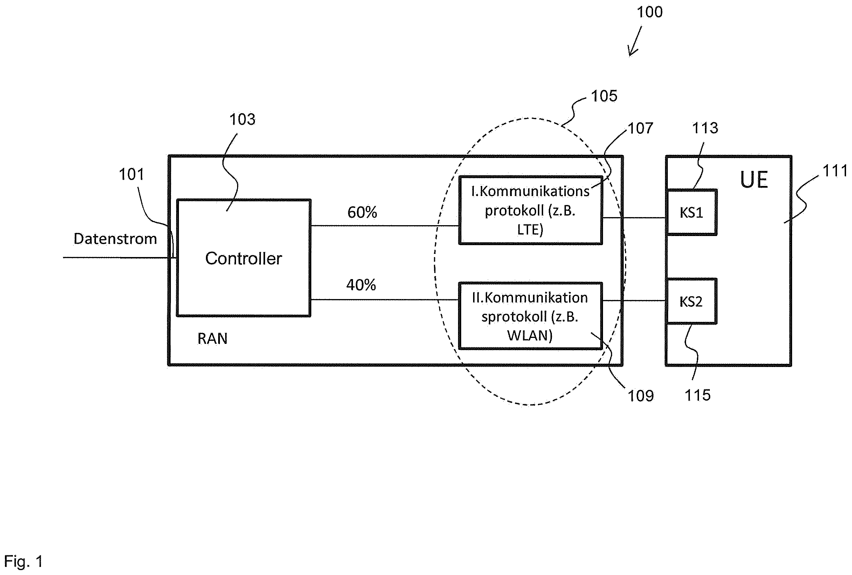

Fig. 1 zeigt ein Kommunikationssystem mit Funkzugangsentität 100 für die Kommunikation mit einem mobilen Kommunikationsgerät über ein Funkzugangsnetzwerk, wobei das mobile Kommunikationsgerät einen ersten Kommunikationsport gemäß einer ersten Datenübertragungstechnologie und einen zweiten Kommunikationsport gemäß einer zweiten Datenübertragungstechnologie aufweist, mit einer ersten Kommunikationsschnittstelle 101 zum Empfangen eines Datenstroms, einem Prozessor 103, welcher ausgebildet ist, den Datenstrom in einen ersten Teildatenstrom und in einen zweiten Teildatenstrom in Abhängigkeit von einer ersten Leistungsfähigkeit des ersten Kommunikationsports des beispielhaft dargestellten mobilen Kommunikationsgerätes 111 und einer zweiten Leistungsfähigkeit des zweiten Kommunikationsport des mobilen

Kommunikationsgerätes 111 aufzuteilen und einer zweiten Kommunikationsschnittstelle 105, welche ausgebildet ist, den ersten Teildatenstrom gemäß der ersten Datenübertragungstechnologie an den erste Kommunikationsport und den zweiten Teildatenstrom gemäß der zweiten Datenübertragungstechnologie an den zweiten Kommunikationsport auszusenden. Die zweite Kommunikationsschnittstelle 105 kann einen ersten Kommunikationsport 107 aufweisen, welcher gemäß der ersten Datenübertragungstechnologie arbeitet, und einen zweiten Kommunikationsport 109 aufweisen, welcher gemäß der zweiten Datenübertragungstechnologie arbeitet.

Der Datenstrom zum UE 111 wird in einer Ausführungsform aufgeteilt in Abhängigkeit von der durch die jeweilige Luftschnittstelle (LTE, WLAN, etc.) erreichbaren Datenrate bzw. Performance des jeweiligen Kommunikationsports des UEs 111.

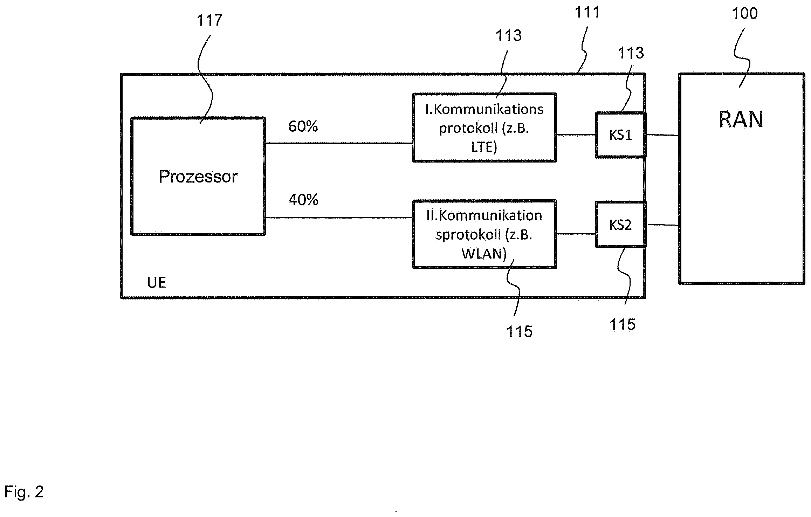

Fig. 2 zeigt ein mobiles Kommunikationsgerät 111 (UE), mit einem ersten Kommunikationsport 113 zum Aussenden oder Empfangen eines ersten Teildatenstroms gemäß einer ersten Datenübertragungstechnologie, einem zweiten Kommunikationsport 115 zum Aussenden oder Empfangen eines zweiten Teildatenstroms gemäß einer zweiten Datenübertragungstechnologie, und einem Prozessor 117, welcher ausgebildet ist, einen Datenstrom aus dem ersten Teildatenstrom und dem zweiten Teildatenstrom zusammenzusetzen oder in Abhängigkeit von einer ersten Leistungsfähigkeit des ersten Kommunikationsports 113 des mobilen Kommunikationsgeräts und einer zweiten Leistungsfähigkeit des zweiten Kommunikationsports 115 des mobilen Kommunikationsgerät aufzuteilen.

Das UE 111 hat mehrere Luftschnittstellen (Kommunikationsports), wie LTE oder WLAN. Der Controller bzw. Prozessor 103 der Funkzugangsentität 100 misst in einer Ausführungsform laufend die Performance des jeweiligen Kommunikationsports 113, 115 des UEs 11 oder bekommt die Messung vom UE 111 und teilt den Datenstrom entsprechend auf. Im Beispiel hat der Kommunikationsport 113 mehr Performance als der Kommunikationsport 115 (beispielsweise höhere Datenrate, geringere Bitfehlerrate usw.), sodass eine Aufteilung des Datenstroms in die Teildatenströme beispielsweise im Performanceverhältnis durchgeführt werden kann.

Die Aufteilung des Datenstroms kann beispielsweise paketorientiert sein, sodass die Datenpakete auf die Luftschnittstellen 111, 115 aufgeteilt werden. Das UE 111 setzt den Datenstrom mit den Datenpaketen entsprechend der Aufteilung zusammen. Auf diese Weise wird die vorhandene RAN-Diversität genutzt, um die Übertragungskapazität zu erhöhen. Im UE 111 werden die Datenpakete nach Performance der Luftschnittstellen 113, 115 wie vorstehend ausgeführt aufgeteilt. Die Teilpakete werden in Analogie zum Download-Fall über verschiedene Datenübertragungstechnologien zum RAN mit der Funkzugangsentität 100 ausgesendet. In einer Ausführungsform können die Kommunikationsports 113, 115 des UEs 111 beispielsweise separate Antennen aufweisen. Alternativ können die vorhandenen Antennen des UEs 111 (Antennendiversität) separat angesteuert werden.

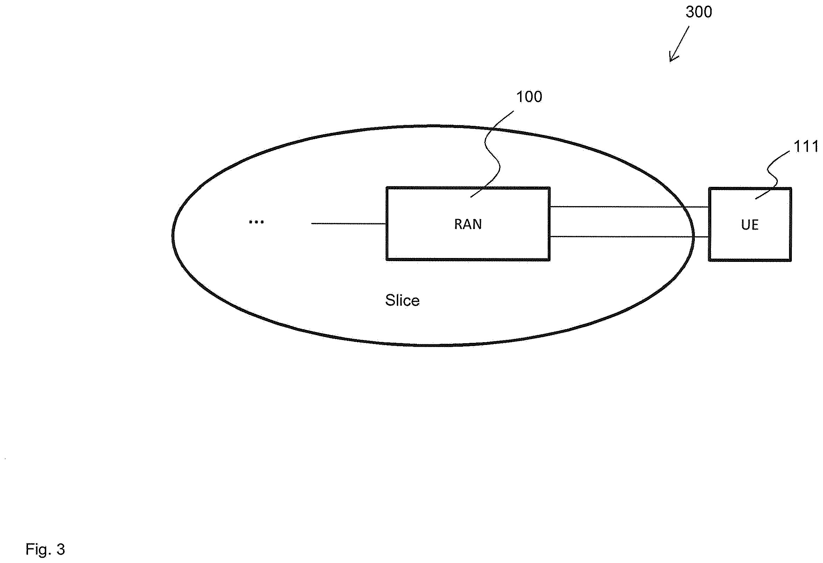

Fig. 3 zeigt ein Subkommunikationsnetzwerk 300 in einem nicht dargestellten Kommunikationsnetzwerk mit einer Mehrzahl von Subnetzwerken, mit der Funkzugangsentität 100, wobei die zweite Kommunikationsschnittstelle 105 ausgebildet ist, den ersten Teildatenstrom gemäß der ersten Datenübertragungstechnologie zu empfangen oder auszusenden und den zweiten Teildatenstrom gemäß der zweiten Datenübertragungstechnologie separat von dem ersten Teildatenstrom zu empfangen oder auszusenden.

Das Subkommunikationsnetzwerk 300 kann eine Slice eines 5G-Kommunikationsnetzwerks sein, welche die Aufteilung oder Zusammensetzung des Datenstroms in den ersten Teildatenstrom und in den zweiten Teildatenstrom oder aus dem ersten Teildatenstrom und dem zweiten Teildatenstrom bewirkt. Die RAN-Slice 300 kann als Service bereitgestellt werden und für diejenigen UEs 111 zur Verfügung gestellt werden, welche die Datenaufteilung vorsehen. Die RAN-Slice 300 kann eine eigene Slice-Adresse/Slice-Identifier bekommen.

Jeder Teildatenstrom kann in einer Ausführungsform einen Identifier bekommen, wodurch eine Zusammensetzung des Datenstroms aus den Teildatenströmen vereinfacht werden kann.

## Patentansprüche

1. Funkzugangsentität (100) für die Kommunikation mit einem mobilen Kommunikationsgerät über ein Funkzugangsnetzwerk, wobei das mobile Kommunikationsgerät einen ersten Kommunikationsport gemäß einer ersten Datenübertragungstechnologie und einen zweiten Kommunikationsport gemäß einer zweiten Datenübertragungstechnologie aufweist, mit:
einer ersten Kommunikationsschnittstelle (101) zum Empfangen eines Datenstroms;
einem Prozessor (103), welcher ausgebildet ist, den Datenstrom in einen ersten Teildatenstrom und in einen zweiten Teildatenstrom in Abhängigkeit von einem Verhältnis einer ersten Leistungsfähigkeit des ersten Kommunikationsports des mobilen Kommunikationsgerätes und einer zweiten Leistungsfähigkeit des zweiten Kommunikationsports des mobilen Kommunikationsgerätes aufzuteilen; und
einer zweiten Kommunikationsschnittstelle (105), welche ausgebildet ist, den ersten Teildatenstrom gemäß der ersten Datenübertragungstechnologie an den erste Kommunikationsport und den zweiten Teildatenstrom gemäß der zweiten Datenübertragungstechnologie an den zweiten Kommunikationsport auszusenden;
wobei die Funkzugangsentität (100) ausgebildet ist, eine Angabe über die erste Leistungsfähigkeit und die zweite Leistungsfähigkeit von dem mobilen Kommunikationsgerät zu empfangen.

2. Funkzugangsentität (100) nach Anspruch 1, wobei die erste Leistungsfähigkeit und die zweite Leistungsfähigkeit Datenraten oder Bitfehlerraten oder Performanceindikatoren sind.

3. Funkzugangsentität (100) nach einem der vorstehenden Ansprüche, wobei der Datenstrom eine Anzahl von Datenpaketen aufweist, und wobei der Prozessor ausgebildet ist, dem ersten Teildatenstrom eine erste Anzahl von Datenpaketen und dem zweiten Teildatenstrom eine zweite Anzahl von Datenpaketen zuzuweisen.

4. Funkzugangsentität (100) nach einem der vorstehenden Ansprüche, wobei die erste Datenübertragungstechnologie und die zweite Datenübertragungstechnologie eine der folgenden drahtlosen Datenübertragungstechnologien sind: LTE, UMTS, GSM, Hiperlan, WLAN.

5. Funkzugangsentität (100) nach einem der vorstehenden Ansprüche, wobei die zweite Kommunikationsschnittstelle (105) einen ersten Kommunikationsport (107) für das Aussenden oder Empfangen des ersten Teildatenstroms und einen zweiten Kommunikationsport (109) für das Aussenden oder Empfangen des zweiten Teildatenstroms umfasst.

6. Funkzugangsentität (100) nach einem der vorstehenden Ansprüche, welche ausgebildet ist, die erste Leistungsfähigkeit und die zweite Leistungsfähigkeit des mobilen Kommunikationsgeräts zu messen, insbesondere auf der Basis zumindest eines Messsignals zu messen.

7. Funkzugangsentität (100) nach einem der vorstehenden Ansprüche, wobei die Funkzugangsentität (100) einem Punkt-zu-Punkt-Subkommunikationsnetzwerk, insbesondere einem Slice, gemäß der 5G-Technologie zugeordnet ist.

8. Mobiles Kommunikationsgerät (111), mit:
einem ersten Kommunikationsport (113) zum Aussenden oder Empfangen eines ersten Teildatenstroms gemäß einer ersten Datenübertragungstechnologie;
einem zweiten Kommunikationsport (115) zum Aussenden oder Empfangen eines zweiten Teildatenstroms gemäß einer zweiten Datenübertragungstechnologie; und
einem Prozessor (117), welcher ausgebildet ist, einen Datenstrom aus dem ersten Teildatenstrom und dem zweiten Teildatenstrom zusammenzusetzen oder in Abhängigkeit von einem Verhältnis einer ersten Leistungsfähigkeit des ersten Kommunikationsports des mobilen Kommunikationsgerätes (111) und einer zweiten Leistungsfähigkeit des zweiten Kommunikationsports des mobilen Kommunikationsgeräts (111) aufzuteilen;
wobei das mobile Kommunikationsgerät (111) ausgebildet ist, eine Angabe über die erste Leistungsfähigkeit und die zweite Leistungsfähigkeit an die Funkzugangsentität (100) auszusenden.

9. Subkommunikationsnetzwerk (300) in einem Kommunikationsnetzwerk mit einer Mehrzahl von Subnetzwerken, mit:
der Funkzugangsentität (100) nach einem der Ansprüche 1 bis 7, wobei die zweite Kommunikationsschnittstelle (105) ausgebildet ist, den ersten Teildatenstrom gemäß der ersten Datenübertragungstechnologie zu empfangen oder auszusenden und den zweiten Teildatenstrom gemäß der zweiten Datenübertragungstechnologie separat von dem ersten Teildatenstrom zu empfangen oder auszusenden.

10. Subkommunikationsnetzwerk (300) nach Anspruch 9, mit einer weiteren Netzwerkentität, insbesondere einem Router, welche ausgebildet ist, mit der Funkzugangsentität (100) zu kommunizieren.

11. Subkommunikationsnetzwerk (300) nach Anspruch 10, wobei die weitere Netzwerkentität ausgebildet ist, den ersten Teildatenstrom und den zweiten Teildatenstrom separat voneinander zu empfangen.

12. Subkommunikationsnetzwerk (300) nach einem der Ansprüche 9 bis 11, das ein Punkt-zu-Punkt-Subkommunikationsnetzwerk, insbesondere eine Slice, gemäß der 5G-Technologie ist.

## Claims

1. A radio access entity (100) for communication with a mobile communication device over a radio access network, wherein the mobile communication device has a first communication port according to a first data transfer technology and a second communication port according to a second data transfer technology, having:
a first communication interface (101) for receiving a data stream;
a processor (103), which is configured for splitting the data stream into a first component data stream and into a second component data stream as a function of a ratio of a first performance of the first communication port of the mobile communication device to a second performance of the second communication port of the mobile communication device; and
a second communication interface (105), which is configured to transmit the first component data stream according to the first data transfer technology to the first communication port and the second component data stream according to the second data transfer technology to the second communication port;
wherein the radio access entity (100) is configured to receive information on the first performance and on the second performance from the mobile communication device.

2. The radio access entity (100) according to Claim 1, wherein the first performance and the second performance are data rates or bit error rates or performance indicators.

3. The radio access entity (100) according to any one of the preceding claims, wherein the data stream has a number of data packets and wherein the processor is configured to allocate a first number of data packets to the first component data stream and a second number of data packets to the second component data stream.

4. The radio access entity (100) according to any one of the preceding claims, wherein the first data transfer technology and the second data transfer technology are one of the following wireless data transfer technologies: LTE, UMTS, GSM, HiperLAN, WLAN.

5. The radio access entity (100) according to any one of the preceding claims, wherein the second communication interface (105) comprises a first communication port (107) for transmitting or receiving the first component data stream and a second communication port (109) for transmitting or receiving the second component data stream.

6. The radio access entity (100) according to any one of the preceding claims, which is configured to measure the first performance and the second performance of the mobile communication device, in particular on the basis of at least one measurement signal.

7. The radio access entity (100) according to any one of the preceding claims, wherein the radio access entity (100) is associated with a point-to-point subcommunication network, in particular with a slice, according to 5G technology.

8. A mobile communication device (111) having:
a first communication port (113) for transmitting or receiving a first component data stream according to a first data transfer technology;
a second communication port (115) for transmitting or receiving a second component data stream according to a second data transfer technology; and
a processor (117), which is configured to assemble a data stream from the first component data stream and the second data stream or to split a data stream as a function of a ratio of a first performance of the first communication port of the mobile communication device (111) to a second performance of the second communication port of the mobile communication device (111) ;
wherein the mobile communication device (111) is configured to transmit information on the first performance and on the second performance to the radio access entity (100).

9. A subcommunication network (300) in a communication network having a plurality of subnetworks, having:
the radio access entity (100) according to any one of Claims 1 to 7, wherein the second communication interface (105) is configured to receive or transmit the first component data stream according to the first data transfer technology and to receive or transmit the second component data stream according to the second data transfer technology separately from the first component data stream.

10. The subcommunication network (300) according to Claim 9, having a further network entity, in particular a router, which is configured to communicate with the radio access entity (100).

11. The subcommunication network (300) according to Claim 10, wherein the further network entity is configured to receive the first component data stream and the second component data stream separately from one another.

12. The subcommunication network (300) according to any one of Claims 9 to 11, which is a point-to-point subcommunication network, in particular a slice, according to 5G technology.

## Revendications

1. Entité d'accès sans fil (100) pour la communication avec un appareil de communication mobile via un réseau d'accès sans fil, l'appareil de communication mobile comportant un premier port de communication selon une première technologie de transfert de données et un deuxième port de communication selon une deuxième technologie de transfert de données, comprenant :
une première interface de communication (101), destinée à réceptionner un flux de données ;
un processeur (103), lequel est conçu pour diviser le flux de données en un premier flux de données partiel et en un deuxième flux de données partiel, en fonction d'un rapport d'une première capacité de performance du premier port de communication de l'appareil de communication mobile à une deuxième capacité de performance du deuxième port de communication de l'appareil de communication mobile ; et
une deuxième interface de communication (105), laquelle est conçue pour envoyer le premier flux de données partiel selon la première technologie de transfert de données au premier port de communication et le deuxième flux de données partiel selon la deuxième technologie de transfert de données au deuxième port de communication ;
l'entité d'accès sans fil (100) étant conçue pour réceptionner une indication concernant la première capacité de performance et la deuxième capacité de performance de la part de l'appareil de communication mobile.

2. Entité d'accès sans fil (100) selon la revendication 1, la première capacité de performance et la deuxième capacité de performance étant des débits de données ou des taux d'erreurs de bits ou des indicateurs de performance.

3. Entité d'accès sans fil (100) selon l'une quelconque des revendications précédentes, le flux de données comportant un nombre de paquets de données et le processeur étant conçu pour affecter au premier flux de données partiel un premier nombre de paquets de données et au deuxième flux de données partiel un deuxième nombre de paquets de données.

4. Entité d'accès sans fil (100) selon l'une quelconque des revendications précédentes, la première technologie de transfert de données et la deuxième technologie de transfert de données étant l'une des technologies de transfert de données sans fil suivantes : LTE, UMTS, GSM, Hiperlan, WLAN.

5. Entité d'accès sans fil (100) selon l'une quelconque des revendications précédentes, la deuxième interface de communication (105) comprenant un premier port de communication (107) pour l'envoi ou la réception du premier flux de données partiel et un deuxième port de communication (109) pour l'envoi ou la réception du deuxième flux de données partiels.

6. Entité d'accès sans fil (100) selon l'une quelconque des revendications précédentes, laquelle est conçue pour mesurer la première capacité de performance et la deuxième capacité de performance de l'appareil de communication mobile, notamment pour la mesurer sur la base d'au moins un signal de mesure.

7. Entité d'accès sans fil (100) selon l'une quelconque des revendications précédentes, l'entité d'accès sans fil (100) étant affectée à un réseau de sous-communication point à point, notamment à une tranche selon la technologie 5G.

8. Appareil de communication mobile (111), comprenant :
un premier port de communication (113) pour l'envoi ou la réception d'un premier flux de données partiel selon une première technologie de transfert de données ;
un deuxième port de communication (115) pour l'envoi ou la réception d'un deuxième flux de données partiel selon une deuxième technologie de transfert de données ; et
un processeur (117), lequel est conçu pour assembler un flux de données provenant du premier flux de données partiel et du deuxième flux de données partiel ou pour le diviser en fonction d'un rapport d'une première capacité de performance du premier port de communication de l'appareil de communication mobile (111) à une deuxième capacité de performance du deuxième port de communication de l'appareil de communication mobile (111) ;
l'appareil de communication mobile (111) étant conçu pour envoyer à l'entité d'accès sans fil (100) une indication concernant la première capacité de performance et la deuxième capacité de performance.

9. Réseau de sous-communication (300) dans un réseau de communication doté d'une pluralité de sous-réseaux, comprenant :
l'entité d'accès sans fil (100) selon l'une quelconque des revendications 1 à 7, la deuxième interface de communication (105) étant conçue pour réceptionner ou envoyer le premier flux de données partiel selon la première technologie de transfert de données et pour réceptionner ou envoyer le deuxième flux de données partiel selon la deuxième technologie de transfert de données séparément du premier flux de données partiel.

10. Réseau de sous-communication (300) selon la revendication 9, comprenant une entité de réseau supplémentaire, notamment un routeur, lequel est conçu pour communiquer avec l'entité d'accès sans fil (100).

11. Réseau de sous-communication (300) selon la revendication 10, l'entité de réseau supplémentaire étant conçue pour réceptionner séparément l'un de l'autre le premier flux de données partiel et le deuxième flux de données partiel.

12. Réseau de sous-communication (300) selon l'une quelconque des revendications 9 à 11, qui est un réseau de sous-communication point à point, notamment une tranche selon la technologie 5G.
